# EUROPEAN PATENT SPECIFICATION

(11) **EP 1 185 815 B1**
(45) Date of publication and mention of the grant of the patent: **12.05.2004**
(21) Application number: 00944217.9
(22) Date of filing: 22.06.2000
(51) Int. Cl.: F16L 37/084

(54) **RAPID CONNECTION FOR TUBES**
SCHNELLROHRKUPPLUNG
DISPOSITIF DE RACCORD RAPIDE POUR TUBES

(30) Priority: 22.06.1999 IT BS990053 U
(43) Date of publication of application: 13.03.2002
(73) Proprietor: Bottura, Olindo, 25122 Brescia (IT)
(72) Inventor: Bottura, Olindo, 25122 Brescia (IT)
(74) Representative: Crippa, Paolo Ernesto
(86) International application number: PCT/IT2000/000257
(87) International publication number: WO 2000/079173

(56) References cited:
- US-A- 4 123 090
- US-A- 4 288 113
- US-A- 5 695 224

## Description

### Field of the invention

The present invention concerns a rapid fitting for tubes, in particular a connection fitted with a toothed spring washer for gripping the tube.

### State of the art.

At present there are several rapid fitting devices which enable tubes to be connected to each other or tubes to mechanical devices such as boilers, solenoid valves, tanks, distributors, etc, such as that described in US 4 123 090 A and US 4 288 113 A on which the preambe of claim 1 is based.

These devices have in common:
■ The possibility of inserting the end of the tube into the fitting in one single operation, guaranteeing at the same time a seal and locking of the tube itself;
■ The possibility of disconnecting the tube by means of a double operation consisting in applying pressure on the fitting and pulling the tube outwards from the fitting;
■ The presence of a seal (O-ring or other).

These fittings also have in common:
■ A lever element which, when pressed, allows the tube to be extracted from the fitting;
■ A spring element for gripping the tube;
■ A supporting element of the spring element.

These elements may be present only in part, in that some of them may carry out several functions at the same time: for example, the lever element may also act as the tube gripping element.

Therefore, the state of art as regards to rapid fittings can be summarised into the following two types.
■ Fittings where the release lever element and the tube gripping element form one component It is made up of axial spring brackets of almost the same length or longer than the diameter of the element itself. This type of fitting is usually without the other elements in that the functions of containing the top and bottom of the release element are performed by the particular undercuts machined directly inside the body of the fitting.
■ Fittings where the lever and gripping elements are separate. In this case, the former is similar in all fittings, as it has a cylindrical shape with a front nosepiece which interacts with the gripping element and a flange operated by the user. The gripping element is, on the other hand, usually a spring washer equipped with teeth (or petals) positioned in a radial formation, oriented towards the inside, that is towards the external surface of the tube, and shaped similar to the toothed washers used as an anti-unscrewing device for screws.

The fittings of the first type have the drawback of using only the elasticity of the seal as a means of producing an opening of the tube gripping element when the tube requires to be disconnected, so much so that this causes a lowering of performance when, over a period of time, the seal loses its elasticity and wears, sometimes making it impossible to extract the tube when operating the release element.

### SUMMARY OF THE INVENTION

The present invention involves an incorporated spring washer type rapid fitting for tubes, but achieved using a new combination and shape of the elements and where the spring washer is exploited in an original way enabling the fitting to be user friendly, more efficient and ensuring safe locking of tube inserted into it.

This objective is achieved with a rapid fitting for tubes according to at least claim 1.

### Brief description of drawings

Further details of the invention will however become more evident as the description evolves with reference to the enclosed indicative and not binding drawings, in which:
Fig. 1 shows, a partial longitudinal cross-section of the fitting applied to a tube;
Fig. 2 shows, a partial cross-section of the body of the fitting complete with seal and ring nut acting as guide and housing for the release lever;
Fig. 3 shows, once more as a partial cross-section, only the body of the fitting; and
Fig. 4 and 5 show two views, one front on and the other from the side of the tube lock spring washer.

### A detailed description of a preferred execution

The fitting proposed here is made up essentially of a body 1, a guide ring nut 2, a pin or release lever 3, a toothed spring washer 4 and a toric seal 5.

The body 1 and the guide ring nut 2 are usually brass; the pin or release lever 3 is high slip capacity plastic (POM); the toothed spring washer 4 is high tensile steel; the O-ring type seal 5, is an elastomer.

As can be seen from the drawings, the body 1 is machined to form a housing 6, for the most part stepped and shaped to receive the operating components of the fitting and inside the former the end section of a tube 20 to be locked. The guide ring nut 2 is placed at the entrance of said housing 6 of the body 1; the spring washer 4 is placed at the internal face of said ring nut, between the latter, the body and the tube 20 to be locked; the seal 5 is positioned further inside in the body 1, between the latter and the external surface of the tube 20. The release lever 3 is positioned and guided internally to the ring nut 2, between the latter and the tube, and has a nose 14 pointing towards and interacting with the spring washer 4. Furthermore at the bottom of the housing 6 the body 1, has a circular supporting shoulder 17 for the internal end of the tube 20 and this shoulder has a hole 18 which is coaxial to the tube when the latter is inserted into the fitting.

The device in question carries out the function as a connection between tubes or between a tube and a mechanical element; therefore it must guarantee both its sealing and tube locking capacities, so as to avoid release while under pressure during normal working conditions, and release due to accidental pulling of the tube.

The seal 5 guarantees sealing and the toothed spring washer 4 locking of the tube.

The most salient feature of this type of realisation is the fact that the housing 6 in the body 1 is executed so as to house the seal 5 and to create a cylindrical chamber 16 necessary for the grip spring washer 5 directly in the body 1 of the fitting, eliminating in this way a component normally present in fittings executed using this technology, which is the lower support bushing for the spring element.

The assembly sequence is as follows:
■ Seal 5;
■ Spring washer 4;
■ Ring nut 2.

These elements are held axially in their housings by coining the top lip 1' of the body.

The final assembly operation consists in inserting the release lever 3 in the ring nut of the fitting, where it is held by a locking claw 8 which engages an undercut 9 present on the inside of the ring nut 2.

The spring washer 4, as shown in Fig. 4, is made up of a circular crown 10 from which the gripping teeth 11 stem in a radial formation towards the centre and slope at an angle of 30° in relation to the plane of the circular crown, facing in the opposite direction to the release direction of the tube 20.

The internal diameter d of these teeth is less than the external diameter of the tube which is to be inserted into the fitting so as to form the necessary engaging conditions.

A prerogative of the fitting is that the circular crown 10 of the spring washer 4 is positioned between the ring nut 2 and a step 12, specifically machined in the body 1.

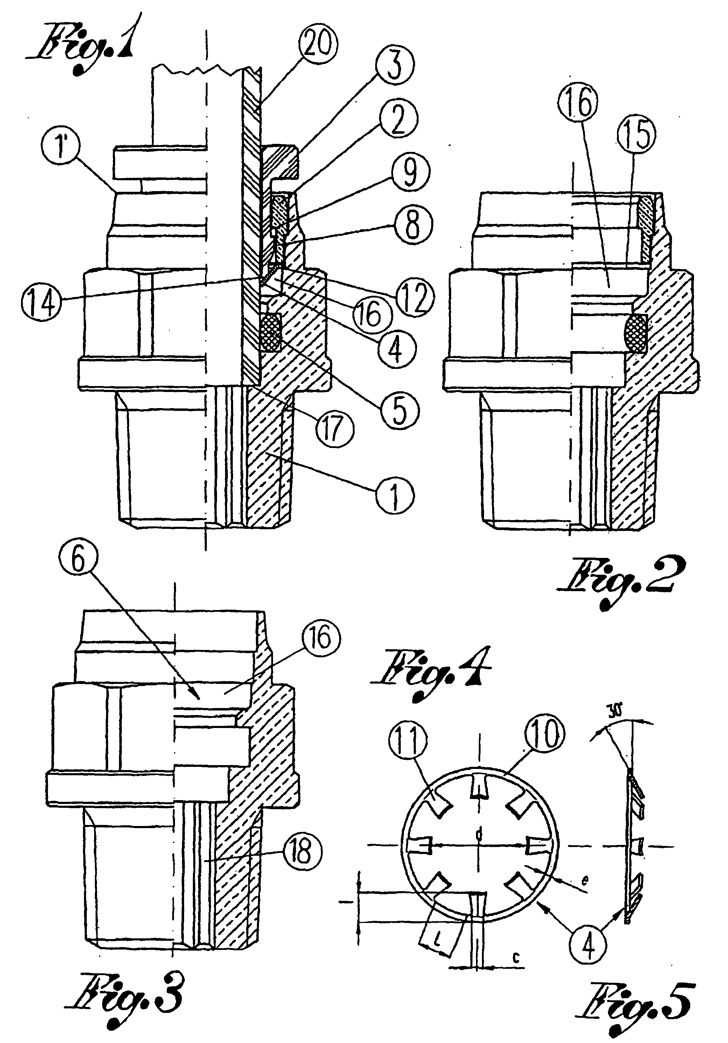

When the fitting is assembled, the spring washer 4 in this way is within an area or housing 15 defined by the space enclosed between the ring nut 2 and the step 12 in the body, as shown in Fig. 2.

The enclosed area 15 of the circular crown of the spring washer 4 is slightly higher than the thickness of the latter; in this way the spring washer 4 has the possibility of turning on its axis, but cannot substantially translate axially either internally or extemally.

The freedom of the spring washer 4 to rotate is another of the essential requirements for this type of fitting, in that, should the tube turn, the spring washer 4, by turning together with it, does not cut it, as happens with fittings where the tube gripping element is stationary in relation to the body of the fitting.

When the tube is inserted into the fitting, the contact existing with the internal diameter d of the teeth 11 causes them to divaricate and flex in relation to their bases moving away from the external diameter of the tube.

The cylindrical chamber 16, machined in the body, on a level with the washer 4, has the task of allowing the teeth 11 to move freely around their base.

The elasticity of the teeth 11, due to the high yield point of the material with which the spring washer 4 is made, holds them tightly pressed against the external wall of the tube in correspondence with their sharp edge.

An attempt to extract the tube by pulling it in the opposite direction to the one used to insert it, will form a small cut in the external surface of the tube causing the teeth to become entangled.

If the attempt to pull out the tube continues, the teeth 11 bend in the opposite direction to the one caused by the tube being inserted, and therefore reduce the size of the opening for the tube: the more the tube gets pulled the more the teeth react to it.

The release lever 3 in a case such as this, carries out the important role of stopping the teeth 11 from bending back and given that the teeth rest against the nose 14 of the release lever, of stopping them from bending right back over.

In order to release the tube and extract it from the fitting, the release lever 3 has to be pressed right down and at the same time the tube pulled out.

The lever 3, in this phase, divaricates the teeth 11 more than the inserted tube has already done, causing them to bend further until an opening is created which is wider than the external diameter of the tube itself.

In short, the following innovative aspects can be found in the fitting described above.

In the spring washer, the crown is indeformable, the teeth bend individually, capable of turning around their root and slope at an angle of 30° in relation to the plane of the circular crown.

Furthermore, the spring washer is held in the body by only one element, the ring nut, lodged in a circular housing which allows it to rotate without however allowing it to carry out any substantial axial translation.

## Claims

1. Device for connecting tubes, made up of a body (1) with a housing (6) to receive and hold the operating components and coaxially to the latter an end section of a tube to be locked and where said components include, a guide ring nut (2) placed at the entrance of said housing (6), a toothed spring washer (4) placed at the internal face of said ring nut (2) and employed to hold the tube to be locked, a seal (5) between said body and said tube, and a release lever (3) placed and guided in said ring nut (2) between the latter and the tube and having a nose employed to interact with said spring washer to allow release of the tube following a voluntary action, the spring washer (4) being equipped with an indeformable circular crown (10) from which the flexible teeth (11) stem in a radial direction and which flex around their base set in the circular crown (10) itself, caused either by the insertion of the tube or the release action of the lever (3) **characterized in that** the spring washer (4) has the circular crown (10) positioned in a housing (15) whose height is greater than the thickness of the washer (4), in order to allow it to rotate freely around its axis so as not to cut the tube, this housing being limited by said supporting step (12) with the internal face of said guide ring nut.

2. Device according to claim 1, **characterised by** the fact that the spring washer (4) has the circular crown (10) resting on a step (12), said supporting step being provided in said housing (6) of the body (1) opposite the internal face of said guide ring nut.

3. Device according to claims 1 or 2, **characterised by** the fact that the circular crown (10) of the spring washer (4) confined in a cylindrical housing (15) always remains coaxial to the tube.

4. Device according to the above claims **characterised by** the fact that the cylindrical housing (16) has only the function of allowing the teeth (11) to bend.

5. Device according to the above claims **characterised by** the fact that the nose (14) of the release lever (3) has only the function of spreading apart the teeth (11).

6. Device according to the above claims **characterised by** the fact that the tube is axially held only by the teeth (11) of the spring washer (4).

## Patentansprüche

1. Eine Vorrichtung zur Verbindung von Rohren, die aus einem Körper (1) mit einem Gehäuse (6) für die Aufnahme und das Festhalten der in Betrieb befindlichen Teile besteht und in der, konzentrisch zu dem letztgenannten Teil, ein Endteil eines festzuklemmenden Rohres vorhanden ist. Die besagten Teile umfassen eine Führungsringmutter (2), die am Eingang des besagten Gehäuses (6) untergebracht ist, einen gezahnten Sprungfederdichtungsring (4), der an der Innenseite der besagten Führungsringmutter (2) angebracht ist und für das Festhalten des festzuklemmenden Rohres verwendet wird, eine Dichtung (5) zwischen dem besagten Körper und dem besagten Rohr und einen Freigabehebel (3), der in der besagten Ringmutter (2) zwischen der Letztgenannten und dem Rohr untergebracht sowie geführt ist und über einen Vorsprung verfügt, der dazu verwendet wird auf den besagten Springfederdichtungsring einzuwirken um auf eine spontane Tätigkeit folgend die Freigabe des Rohres zu gestatten. Der Sprungfederdichtungsring (4) ist mit einem nicht verformbaren runden Kranz (10) ausgerüstet, von dem die biegsamen Zähne (11) sternförmig abstehen und sich, verursacht entweder durch die Einführung des Rohres oder durch die Freigabetätigkeit des Hebels (3), um ihr Unterteil biegen, das in den runden Kranz (10) selbst eingesetzt ist. Bezeichnend ist dabei, dass der runde Kranz (10) des Sprungfederdichtungsringes (4) in einem Gehäuse (15) angebracht ist, dessen Höhe größer ist als die Stärke des Dichtungsringes (4), um es diesem zu ermöglichen frei um seine Achsen zu rotieren, damit das Rohr nicht zerschnitten wird. Dieses Gehäuse ist durch die besagte Stützsprosse (12) mit der Innenseite der besagten Führungsringmutter begrenzt worden.

2. Eine dem Anspruch 1 entsprechende Vorrichtung, die durch die Tatsache **gekennzeichnet** wird, dass der runde Kranz (10) des Sprungfederdichtungsringes (4) auf einer Sprosse (12) ruht. Diese besagte Tragesprosse ist in dem besagten Gehäuse (6) des Körpers (1) gegenüber der Innenseite der besagten Führungsringmutter bereitgestellt worden.

3. Eine den Ansprüchen 1 oder 2 entsprechende Vorrichtung, die durch die Tatsache **gekennzeichnet** ist, dass der runde Kranz (10) des Sprungfederdichtungsringes (4) in einem zylinderförmigen Gehäuse (15) eingeschlossen ist und immer konzentrisch zu dem Rohr bleibt.

4. Eine, den obigen Ansprüchen entsprechende, Vorrichtung, die durch die Tatsache **gekennzeichnet** ist, dass das zylinderförmige Gehäuse (16) nur die Funktion erfüllt es den Zähnen (11) zu ermöglichen sich zu biegen.

5. Eine, den obigen Ansprüchen entsprechende, Vorrichtung, die durch die Tatsache **gekennzeichnet** ist, dass der Vorsprung (14) des Freigabehebels (3) nur die Funktion erfüllt die Zähne (11) einzeln zu spreizen.

6. Eine, den obigen Ansprüchen entsprechende, Vorrichtung, die durch die Tatsache **gekennzeichnet** ist, dass das Rohr axial nur durch die Zähne (11) des Sprungfederdichtungsringes (4) gehalten wird.

## Revendications

1. Mécanisme destiné à raccorder des tubes, constitué d'un corps (1) doté d'un logement (6) pour recevoir et maintenir les composants fonctionnels et, coaxialement à ce dernier, d'une section terminale servant à bloquer un tube ; dans celui-ci, les composants comprennent un écrou à bague de guidage (2) placé à l'entrée d'un logement (6), une rondelle dentée à ressort (4) placée sur la face interne de cet écrou à bague (2) et utilisée pour maintenir le tube bloqué, un joint (5) entre le corps et le tube, et un levier de dégagement (3) placé et guidé dans l'écrou à bague (2) entre ce dernier et le tube, et disposant d'un bec utilisé pour entrer en interaction avec la rondelle à ressort afin de permettre le dégagement du tube à la suite d'une action volontaire ; ladite rondelle à ressort (4) étant équipée d'une couronne circulaire indéformable (10), à partir de laquelle les dents flexibles (11) s'écartent selon une direction radiale et se plient autour de leur position de base dans la couronne circulaire (10), sous l'effet de l'insertion du tube ou par l'action de relâchement du levier (3), **caractérisé** en cela par le fait que la rondelle à ressort (4) a sa couronne circulaire (10) positionnée dans un logement (15) dont la taille est plus grande que l'épaisseur de la rondelle (4), ceci afin de lui permettre de pivoter librement autour de son axe de manière à ne pas couper le tube, ce logement étant limité par le palier d'appui (12) ainsi que par la surface interne de l'écrou à bague de guidage.

2. Mécanisme selon la revendication 1, **caractérisé par le fait que** la rondelle à ressort (4) possède une couronne circulaire (10) reposant sur un palier (12), ce palier d'appui étant prévu dans le logement (6) du corps (1) situé face à la surface interne de l'écrou à bague.

3. Mécanisme selon les revendications 1 ou 2, **caractérisé par le fait que** la couronne circulaire (10) de la rondelle à ressort (4), enfermée dans un logement cylindrique (15), reste toujours coaxiale au tube.

4. Mécanisme selon les revendications précédentes, **caractérisé par le fait que** le logement cylindrique (16) a pour seule fonction de permettre aux dents (11) de se plier.

5. Mécanisme selon les revendications précédentes, **caractérisé par le fait que** le bec (14) du levier de dégagement (3) a pour seule fonction de permettre aux dents (11) de s'écarter.

6. Mécanisme selon les revendications précédentes, **caractérisé par le fait que** le tube n'est axialement maintenu que par les dents (11) de la rondelle à ressort (4).
